# EUROPÄISCHE PATENTSCHRIFT

(11) **EP 2 995 746 B1**
(45) Veröffentlichungstag und Bekanntmachung des Hinweises auf die Patenterteilung: **05.07.2017**
(21) Anmeldenummer: 15183252.4
(22) Anmeldetag: 01.09.2015
(51) Int. Cl.: E04F 15/02, F16B 5/00

(54) **MECHANISCHE VERBINDUNG FÜR PANEELE UND VERFAHREN ZUR MONTAGE EINER VERRIEGELUNGSFEDER IN EINEM PANEEL**
MECHANICAL CONNECTION FOR PANELS AND METHOD OF ASSEMBLING A LOCKING SPRING IN A PANEL
LIAISON MÉCANIQUE POUR PANNEAUX ET PROCÉDÉ DE MONTAGE D'UN RESSORT DE VERROUILLAGE DANS UN PANNEAU

(30) Priorität: 01.09.2014 DE 102014112529
(43) Veröffentlichungstag der Anmeldung: 16.03.2016
(73) Patentinhaber: Schulte, Guido, 59602 Rüthen-Meiste (DE)
(72) Erfinder: Schulte, Guido, 59602 Rüthen-Meiste (DE)
(74) Vertreter: Griepenstroh, Jörg

(56) Entgegenhaltungen:
- EP-A2- 2 017 403

## Beschreibung

Die Erfindung betrifft eine mechanische Verbindung für Paneele und ein Verfahren zur Montage einer Verriegelungsfeder in einem Paneel.

Paneele sind plattenförmige Bauteile, insbesondere zur Verschalung von Decken-, Wand- oder Bodenflächen. Paneele für Bodenbeläge, insbesondere Fertigparkett, Echtholzböden oder Laminatfußböden, bestehen aus mehreren Reihen von in ihrer Konfiguration vorwiegend rechteckigen Fußbodenpaneelen. Konventionell besitzen die Fußbodenpaneele auf einer Längsseite und einer Kopfseite durchgehende Nuten und auf der jeweils gegenüberliegenden Längsseite bzw. Kopfseite durchgehende Federn, die an die Nuten formschlüssig angepasst sind. Durch die Verbindung von Nut und Feder werden die Fußbodenpaneele verlegt. An den Nuten und Federn sind mechanische Verriegelungsmittel ausgebildet, welche bei in einem Fußbodenbelag benachbarten Fußbodenpaneelen miteinander in rastenden Eingriff gelangen. Hierdurch soll eine Fugenbildung im verlegten Fußbodenbelag durch Dehnung oder Schrumpfungsvorgänge vermieden werden. An Nut und Feder der Fußbodenpaneele sind aneinander angepasste Verriegelungselemente in Form von Vertiefungen, Ausnehmungen oder Vorsprüngen ausgebildet, um verbundene Fußbodenpaneele in der zusammengefügten Lage leimlos zu halten. Die Paneele sind dadurch in Horizontalrichtung und Vertikalrichtung miteinander verhakt.

In der Regel werden Fußbodenpaneele entlang ihrer Längsseiten ineinander gedreht oder geklickt und anschließend seitlich verschoben, so dass die Kopfseiten aneinander stoßen. Dort kann ein horizontales Einschlagen erfolgen, aber auch ein Abwinkeln, um die Kopfseiten miteinander zu verhaken. Die kopfseitige Verriegelung in Vertikalrichtung kann zum Beispiel über eine Verrieglungsfeder erfolgen, die beim Absenken des zweiten Paneels gegenüber dem bereits verlegten ersten Paneel federnd in eine Haltenut zurückgedrückt wird und anschließend aus der Nut wieder herausspringt und dadurch die beiden Kopfseiten miteinander verriegelt. Es sind auch sogenannte Side-Push-Systeme bekannt (DE 10 2006 037 614 B3), bei denen die kopfseitige Verriegelung erst durch Anlegen einer weiteren Paneelreihe erfolgt. EP2017403 A2 offenbart eine mechanische Verbindung mit den Merkmalen a, b und c des Anspruchs 1. Bei den Lösungen, bei denen die Verriegelungsfeder aktiv in die Haltenut zurückgedrückt werden muss, befindet sich die Verriegelungsfeder ursprünglich im entspannten Zustand in der Haltenut, wird dann beim Zurückdrücken gespannt und federt beim Verriegeln, ähnlich einer Schnappverbindung, wieder zurück. Im Unterschied zu den Side-Push-Systemen ist das Anlegen einer weiteren Paneelreihe zum Verriegeln nicht erforderlich. Dagegen haben die sogenannten Side-Push-Systeme den Vorteil, dass das Ablegen bzw. Abwinkeln der zweiten Paneele im Bereich der zu verbindenden Kopfseiten ohne Überwindung der Federkraft möglich ist. Allerdings muss sichergestellt werden, dass eine Verriegelung durch die nächste Paneelreihe oder durch manuelle Festsetzung der Verriegelungsfeder erfolgt.

Der Erfindung liegt die Aufgabe zugrunde, eine mechanische Verbindung für Paneele aufzuzeigen, die ein längsseitiges Verriegeln der Paneele ohne Überwindung der Federkraft einer Verriegelungsfeder möglich macht, aber gleichzeitig eine sichere Verriegelung der Paneele ermöglicht, auch wenn keine weitere Paneelreihe angelegt wird.

Ferner soll ein Verfahren zur Montage einer Verriegelungsfeder in einem Paneel mit den vorstehenden Eigenschaften aufgezeigt werden.

Die Erfindung löst diese Aufgabe durch eine mechanische Verbindung mit den Merkmalen des Patentanspruchs 1 bzw. durch ein Verfahren zur Montage einer Verriegelungsfeder für eine solche mechanische Verbindung gemäß den Merkmalen des Patentanspruchs 7.

Die mechanische Verbindung für Paneele sieht vor, dass die Paneele an ihren miteinander zu verbindenden Seiten eine Profilierung aufweisen, über welche benachbarte erste und zweite Paneele in der Montagelage miteinander verriegelbar sind. Der Begriff "Paneel" im Sinne der Erfindung steht stellvertretend für plattenförmige Elemente, insbesondere zur Verschalung von Wand-, Decken- oder Bodenflächen.

Eine mechanische Verbindung bedeutet, dass die Verbindung nicht stoffschlüssig ist, also insbesondere frei von Klebstoffen ist, insbesondere frei von Leim.

Die Erfindung schließt aber nicht aus, dass die mechanische Verbindung zusätzlich durch eine stoffschlüssige Verbindung unter Verwendung eines Klebstoffes verstärkt werden kann.

Sofern Begriffe wie oben, unten, vertikal, horizontal oder ähnliche räumliche Angaben benutzt werden, sind sie jeweils auf eine horizontale Verlegeebene bezogen, wie bei Paneelen für einen Bodenbelag. Das Prinzip der mechanischen Verbindung ist auch auf andere räumliche Lagen der Verlegeebene übertragbar.

Die Erfindung betrifft insbesondere die gegenseitige, vertikal wirkende Fixierung der schmaleren Kopfseiten von rechteckigen Paneelen, welche mit ihren längeren Längsseiten mit einer leimfreien Nut-Federverbindung versehen sind. Zum Herstellen einer im Wesentlichen vertikal wirkenden Verriegelung ist eine Verriegelungsfeder an dem ersten Paneel in eine Haltenut eingesetzt. Die Verriegelungsfeder ist beim Verriegeln teilweise hinter eine Verriegelungskante eines benachbarten Paneels verlagerbar. Die Verriegelungskante kann Bestandteil einer Verriegelungsnut des zweiten Paneels sein, das mit dem ersten Paneel verriegelt werden soll.

Zum Verriegeln besitzt die Verriegelungsfeder einen Sperrkörper. Er ist von einer Freigabeposition in eine Verriegelungsposition verlagerbar, um in der Verriegelungsposition hinter die Verriegelungskante zu greifen. Der Sperrkörper überbrückt also eine vertikale Trennebene zwischen dem ersten und dem zweiten Paneel.

Der Sperrkörper ist dasjenige Bauteil, das mit dem ersten und dem zweiten Paneel in der Verriegelungsposition in Kontakt steht. Hierzu ist der Sperrkörper über wenigstens einen federnden Arm an einem Halter abgestützt. Der Halter selbst ist in der Haltenut gehalten. Der Halter kann gewissermaßen als Verankerung oder Fuß der mechanischen Verbindung bezeichnet werden und der Sperrkörper als Kopf, der von der Haltenut hinter die Verriegelungskante des benachbarten Paneels verlagert wird.

Der wenigstens eine federnde Arm befindet sich in der Freigabeposition der Verriegelungsfeder in einer inneren, vorgespannten Position. In der inneren Position ist der Sperrkörper noch nicht so weit ausgefahren, dass er hinter die Verriegelungskante fassen könnte. Die innere Position kann bedeuten, dass der Sperrkörper nicht über eine Nutmündung der Haltenut nach außen vorsteht. Die innere Position kann aber auch bedeuten, dass der Sperrkörper geringfügig über die Haltenut vorsteht, allerdings nur so weit, dass das Ablegen oder Abwinkeln eines zweiten Paneels gegenüber dem ersten Paneel nicht zu einer Berührung mit dem Sperrkörper führt. Das heißt, das zweite Paneel kann ohne den Widerstand des Sperrkörpers mit dem ersten Paneel in Eingriff gebracht werden.

Die innere Position ist aber auch dadurch gekennzeichnet, dass der wenigstens eine federnde Arm vorgespannt ist. Das bedeutet, dass der federnde Arm unter dem Einfluss einer äußeren Kraft in eine Position gebracht worden ist, in der er zwangsweise verharrt. Der wenigstens eine federnde Arm ist unter dem Einfluss einer in Längsrichtung der Haltenut auf den Sperrkörper wirkenden Auslösekraft aus der inneren, vorgespannten Position lösbar.

Diese Auslösekraft wirkt gewissermaßen über ein Side-Push-System, bei welchem die Verriegelungsfeder mit ihrem überstehenden Ende in die Nut hinein gedrückt wird. Wenn der vorgespannte Arm gelöst wird, bewirkt die Entspannung des Arms, dass der mit dem Arm verbundene Sperrkörper unter dem Einfluss der Rückstellkraft teilweise aus der Haltenut heraus in die Verriegelungsposition verlagerbar ist. Die Rückstellkraft des Arms wirkt bei der Verlagerung des Sperrkörpers auf den Halter ein. Der Halter ist wiederum am Nutgrund der Haltenut abgestützt. Der Halter ist so konfiguriert, dass er nicht nur die Rückstellkraft auf den Sperrkörper und auf den Nutgrund überträgt, sondern auch für das Lösen der Arme aus der vorgespannten Position gegen Verschiebung in Längsrichtung der Haltenut gesichert ist. Hierzu können Vorsprünge am Halter ausgebildet sein, die mit einer oder beiden Nutwangen der Haltenut verkrallt sind. Zusätzlich kann der Nutgrund wenigstens eine Vertiefung aufweisen, in welche der wenigstens eine Halter eingreift. Die Vertiefungen können insbesondere konkav, insbesondere bogenförmig gekrümmt ausgebildet sein.

Die erfindungsgemäße mechanische Verbindung hat den Vorteil, dass Paneele ohne den Widerstand einer Verriegelungsfeder montiert werden können. Die Verriegelungsfeder schnappt beim Ablegen des zweiten Paneels nicht sofort ein, sondern muss erst aktiv ausgelöst werden, bevor es zu einer Vertikalverriegelung kommt. Das hat den Vorteil, dass ein Paneel vor dem Anlegen einer zweiten Reihe noch einmal aufgenommen werden kann, um eventuelle Korrekturen vorzunehmen. Erst wenn sich der Monteur sicher ist, dass die Paneele verriegelt werden sollen, kann die Verriegelung manuell oder ganz einfach durch Anlegen einer weiteren Paneelreihe erfolgen. Hierbei wird das überstehende Ende der Verriegelungsfeder in die Haltenut hineingeschoben. Der Verschiebeweg kann kleiner als ein Millimeter sein. Beispielsweise kann bei einer minimalen Längsverschiebung von 1 mm eine Querverlagerung in Richtung des zweiten Paneels von z. B. 2 mm erfolgen. Die konkreten Verstell- und Hubwege hängen von den Abmessungen der Feder und der Ausgestaltung der Arme ab. Damit die Verriegelungsfeder über ihre gesamte Länge gleichmäßig ausfährt, sind mehrere im Abstand zueinander angeordnete Arme vorgesehen. Die Arme sind bevorzugt gleichmäßig über die Länge der Verriegelungsfeder verteilt angeordnet.

Der Sperrkörper ist vor der Montage in der Haltenut über wenigstens eine und bevorzugt mehrere Sollbruchverbindungen stoffschlüssig mit dem Halter verbunden. Die Sollbruchverbindungen sind dafür vorgesehen, beim Annähern des Sperrkörpers an den wenigstens einen Halter zerstört zu werden, wobei das Annähern entgegen der Federkraft des wenigstens einen Arms erfolgt.

Damit der Arm in der Freigabeposition verharrt, sind zwischen dem Sperrkörper und dem Halter wirksame Rastmittel vorgesehen, die in einer inneren, vorgespannten Position des wenigstens einen Arms den Sperrkörper in lösbarem Rasteingriff an dem Halter halten.

Die erfindungsgemäße Verriegelungsfeder im Ausgangszustand, d. h. in dem Zustand ab Werk ein einteiliges, insbesondere materialeinheitlich einteiliges Bauteil. Das vereinfacht die Handhabung der Verriegelungsfeder bei der Montage. Aber auch fertigungstechnisch ist es ein Vorteil, die Verriegelungsfeder beispielsweise im Spritzgussverfahren einteilig herzustellen.

Da die Verriegelungsfedern werkseitig eingesetzt und auch vorgespannt werden sollen, ist es zweckmäßig, wenn die Sperrkörper in einer vorgegebenen Position an den Haltekörpern angeordnet sind, so dass in der Einbaulage der Sperrkörper lediglich gegen den Halter gedrückt werden muss, um diese beiden Funktionskomponenten der Verriegelungsfeder über die Rastmittel miteinander zu verrasten. Bei diesem Annähern werden Sollbruchstellen zwischen dem Sperrkörper und dem Halter zerstört, allerdings nicht in dem Sinne, dass der Sperrkörper von dem Halter entfernt wird, sondern vielmehr, dass die ursprünglich stoffschlüssige Verbindung durch eine formschlüssige Verbindung ersetzt wird. Diese formschlüssige Verbindung ist die innere vorgespannte Freigabeposition, in welcher die Verriegelungsfeder nicht über die Haltenut vorsteht. Die Vorspannung der Verriegelungsfeder ergibt sich durch die Arme, die beim Annähern des Sperrkörpers an den Halter gebogen und dadurch gespannt werden. In der inneren, vorgespannten Position wird der Arm über Rastmittel gehalten, die ebenfalls über eine Auslösekraft, die in Längsrichtung der Haltenut wirkt, gelöst werden können. Der Rasteingriff ist insbesondere eine formschlüssige Verbindung, bei welchem zwei Bauteile miteinander verhakt sind.

Die Rastmittel für den lösbaren Rasteingriff können an dem wenigstens einen Arm angeordnet sein. Sie können aber auch an dem Sperrkörper angeordnet sein. In jedem Fall befindet sich ein Gegenpart des Rastmittels an dem Halter. Die Rastmittel können beispielsweise kleine Haken sein, die auf der dem Halter zugewandten Seite des Sperrkörpers angeordnet sind und dort in hinterschnittene Taschen fassen. Der Arm übt eine Federkraft aus. Diese Federkraft entspricht der Rückstellkraft der Verriegelungsfeder. Wird der lösbare Rasteingriff durch Ausüben der Auslösekraft gelöst, gleiten die Rastmittel voneinander ab. Die formschlüssige Verbindung wird gelöst. Die Rückstellkraft reduziert nun die Krümmung des wenigstens einen Arms und der Sperrkörper wird in das benachbarte Paneel verlagert.

Die Hakenverbindung, über welche der lösbare Rasteingriff realisiert wird, kann jeweils in der Nähe des freien Endes eines Arms und zusätzlich in der Nähe des nicht-freien Endes eines Arms angeordnet sein. Jeder Arm wird dadurch beidendig über die Rastmittel an dem Halter lösbar fixiert. Damit die Haltenut keine zu große Tiefe besitzen muss, kann im Bereich des Halters eine Tasche zur Aufnahme des wenigstens einen federnden Arms in der inneren vorgespannten Position vorgesehen sein. Im Bereich dieser Taschen kann zudem eine Vertiefung am Nutgrund der Haltenut vorgesehen sein. In diese Vertiefung kann der Halter formschlüssig eingreifen. Die Vertiefungen sind insbesondere bogenförmig. Für jeden Arm bzw. jede Tasche kann eine solche Vertiefung vorgesehen sein. Das hat auch den Vorteil, dass die Auslösekraft, die zur Überwindung der Rastmittel erforderlich ist, unmittelbar im Bereich der Rastmittel und das heißt wiederum im Bereich der Arme und der Taschen über die Vertiefungen in die Haltenut eingebracht werden kann. Dadurch wird verhindert, dass sich der oder die Halter in Längsrichtung der Haltenut verschieben.

In einer Weiterbildung der Erfindung ist vorgesehen, dass ein längsseitig aus der Haltenut ragender Teil des Sperrkörpers im Übergang von seiner Oberseite zu seiner Stirnseite eine geneigte Gleitfläche besitzt, über welche der Sperrkörper beim vertikalen Ablegen oder Abwinkeln des benachbarten Paneels wieder in die Haltenut zurück verlagerbar ist, ohne dabei die innere, vorgespannte Position zu erreichen. Wenn das Paneel beim weiteren Absenken schließlich die Montageposition erreicht hat, wird der vorher zurückgedrückte Sperrkörper unter dem Einfluss der Federkraft der Arme wieder herausgedrückt. Er greift in der Montagelage dann hinter die Verriegelungskante des zweiten Paneels.

Die erfindungsgemäße mechanische Verbindung ermöglicht also auch eine Verwendung der Verriegelungsfeder, falls diese sich bereits in der Verriegelungsposition befindet, also ausgefahren ist. Um sicherzustellen, dass eine Montage der Paneele auch mit einer ausgelösten Verriegelungsfeder möglich ist, kann der Sperrkörper zwar wieder zurückgedrückt werden, jedoch ist der Verstellweg so bemessen, dass er nicht wieder in Rasteingriff mit dem Halter gelangen kann. Dementsprechend verhält sich die Verriegelungsfeder für den Fall einer unbeabsichtigten Auslösung wie eine nachgiebige Feder, die geeignet ist, auch ohne Auslösung durch Druck auf ein Ende, d. h. ohne Side-Push, benachbarte Paneele miteinander zu verriegeln.

Die Erfindung betrifft ferner die Montage einer Verriegelungsfeder in einem Paneel zur Herstellung einer mechanischen Verbindung der beiden Paneele. Hierbei wird eine Verriegelungsfeder in die Haltenut eingesetzt, so dass der Halter am Nutgrund der Haltenut anliegt. Anschließend wird der Sperrkörper unter Zerstörung der Sollbruchverbindungen zwischen dem Halter und dem Sperrkörper in Richtung des Nutgrundes verlagert, so dass der wenigstens eine Arm zwischen dem Halter und dem Sperrkörper vorgespannt wird und eine zwischen dem Sperrkörper und dem Halter wirksame Rastverbindung hergestellt wird. Die Verriegelungsfeder wird dementsprechend als einteiliges Bauteil werkseitig hergestellt. Vorzugsweise ist die Verriegelungsfeder materialeinheitlich einteilig. Noch während der Montage ab Werk wird die Sollbruchstelle zerstört, so dass die Verriegelungsfeder in der Montageposition ein zweiteiliges Bauteil ist, dass unter der Vorspannung des wenigstens einen Arms steht.

Die Verriegelungsfeder kann als flächiges Bauteil ausgebildet sein, so dass die Haltenut sehr schmal ausgeführt sein kann. Dadurch kann die erfindungsgemäße mechanische Verbindung auch bei Paneelen mit geringer Dicke zum Einsatz kommen. Zudem ist dann der Materialaufwand für die Verriegelungsfeder gering.

Das erfindungsgemäße Verfahren zum Verbinden von Paneelen umfasst ein erstes Paneel, dass zuerst verlegt wird und ein zweites Paneel, dass mit einer vertikalen Absenk- oder Abschwenkbewegung randseitig an dem ersten Paneel platziert wird, während sich die Verriegelungsfeder in der vorgespannten Freigabeposition befindet. Die Rastverbindung zwischen dem Sperrkörper und dem Halter wird durch eine in Längsrichtung der Haltenut wirkende Auslösekraft gelöst und der Sperrkörper wird unter dem Einfluss der Federkraft des wenigstens einen Arms in die Verriegelungsposition verlagert, in welcher der Sperrkörper hinter die Verriegelungskante des benachbarten Paneels greift.

Die erfindungsgemäße mechanische Verbindung kann grundsätzlich auch manuell hergestellt werden. Das heißt, dass nach dem Verlegen einer Paneelreihe von Hand auf das Ende der Verriegelungsfeder gedrückt wird, um diese auszulösen bzw. um sie vollständig in die Haltenut zu versenken. Bevorzugt erfolgt die Auslösung der Verriegelungsfeder selbsttätig durch das Anlegen einer weiteren Reihe von Paneelen, welche den rückseitigen Stoßbereich der vorhergehend verlegten Reihe von Paneelen überbrücken. Dementsprechend werden die Kopfseiten erst dann verrastet, wenn ein weiteres Paneel mit den Längsseiten der vorgehenden Paneelreihe in Eingriff gelangt.

Eine weitere Möglichkeit sieht vor, dass die Verriegelungsfeder bereits entspannt ist und der Sperrkörper aus der Haltenut herausragt, wobei der Sperrkörper beim Ansetzen des zweiten Paneels nur so weit durch Abgleiten auf der Gleitfläche des Sperrkörpers in die Haltenut gedrückt wird, dass die Rastelemente nicht miteinander in Eingriff gelangen und der Sperrkörper unter dem Einfluss der Federkraft des wenigstens einen Arms in die Verriegelungsposition verlagert wird.

Der Erfindungsgedanke ist insbesondere auf alle Bodensysteme anwendbar, bei denen ein Bodenbelag auf einem Träger angeordnet ist, wie beispielsweise Echtholzbeläge, Laminat, Träger mit lackierten Oberflächen als Oberbelag, Linoleum, Kork auf Trägerplatten etc. Der Werkstoff für die Verriegelungsfeder kann sowohl ein Holzwerkstoff sein, d. h. es kann sich um Holz oder einen Holzfasern enthaltenden Werkstoff handeln. Es kann sich um einen Verbundwerkstoff handeln. Die Verriegelungsfeder kann aus Metall oder einer Metalllegierung bestehen. Der Einsatz von Bimetallen oder Mischkunststoffen ist ebenso möglich wie die Verwendung von Werkstoffen auf Basis thermoplastischer oder duroplastischer Kunststoffe. Die Verriegelungsfeder kann insbesondere aus einem faserverstärkten Kunststoff mit einem Faseranteil von 20 % bis 60 % bestehen. Die Verriegelungsfeder besteht insbesondere aus Polyamid. Die Kunststoffe sind insbesondere glasfaserverstärkt. Die Verriegelungsfeder kann materialeinheitlich-einstückig ausgebildet sein. Denkbar ist es aber auch, Teile der Verriegelungsfeder aus voneinander abweichenden Werkstoffen herzustellen, wobei die Verriegelungsfeder trotz der unterschiedlichen Werkstoffe insgesamt doch ein ursprünglich einstückiges Bauteil ist, dass beim werkseitigen Montieren die Verriegelungsfeder zur Zerstörung der Sollbruchverbindungen zu einem zweiteiligen Bauteil wird.

Die Erfindung wird nachfolgend anhand von in den Zeichnungen schematisch dargestellten Ausführungsbeispielen näher erläutert. Es zeigt:
- Figur 1: in der Draufsicht einen Ausschnitt aus einem Fußbodenbelag;
- Figur 2: einen Vertikalschnitt durch den Kopfbereich zweier miteinander in Eingriff stehender Paneele;
- Figur 3: eine Draufsicht auf eine vorgefertigte Verriegelungsfeder mit intakten Sollbruchstellen;
- Figur 4: die Verriegelungsfeder der Figur 3 in der inneren, vorgespannten Position bei zerstörten Sollbruchstellen;
- Figur 5: die Verriegelungsfeder der Figur 4 in der inneren Position, allerdings mit gekrümmten Armen, zur Verdeutlichung des Hubweges und der Federvorspannung und
- Figur 6: die Verriegelungsfeder der Figuren 3 bis 5 in der Verriegelungsposition.

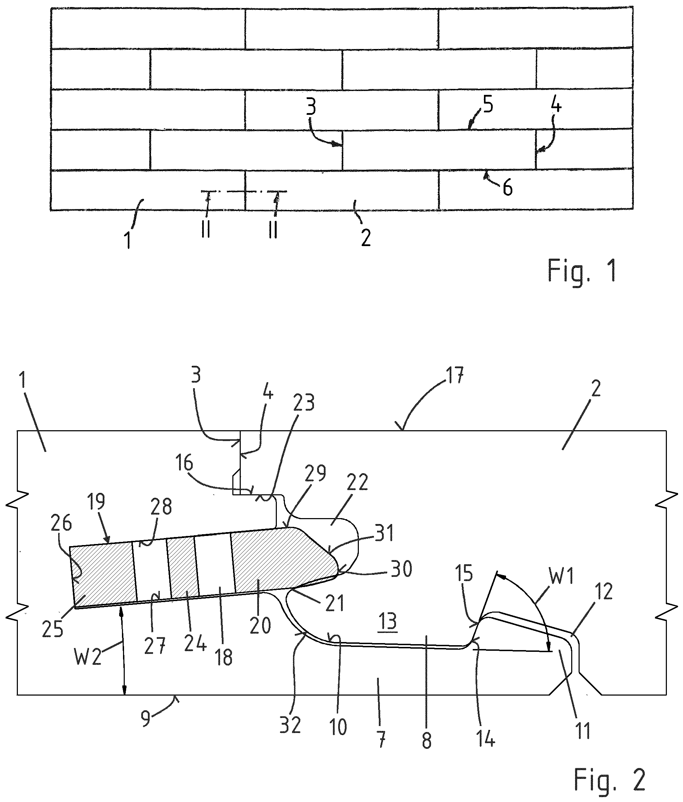

Figur 1 zeigt einen Fußbodenbelag bestehend aus einer Vielzahl von im Verbund verlegten rechteckigen Paneelen 1, 2. Die Paneele 1, 2 sind alle identisch und werden lediglich zur Unterscheidung unterschiedlich gekennzeichnet. Die Paneele 1, 2 weisen an ihren Kopfseiten 3, 4 Verriegelungsleisten auf. Ebenso sind an ihren längeren Längsseiten 5, 6 korrespondierende Verriegelungsleisten vorgesehen. Die Verriegelungsleisten gelangen in der Montagelage bei in einem Belag benachbarter Paneelen 1, 2 miteinander in Eingriff. Dieser Eingriff dient zur Verriegelung der Paneele 1, 2 in Horizontalrichtung.

In Figur 2 sind Verriegelungsleisten 7, 8 zu erkennen, die für die Horizontalverriegelung ineinander verhakt sind. Die Verriegelungsleisten 7, 8 sind an jedem Paneel 1, 2 ausgebildet. Das in der Bildebene linke Paneel 1 ist das erste Paneel, weil es zuerst verlegt wird. Das in der Bildebene rechte Paneel 2 ist das zweite Paneel, weil es später verlegt wird. Dementsprechend besitzt das erste Paneel 1 eine erste Verriegelungsleiste 7 an seiner Kopfseite 4. Das zweite Paneel 2 besitzt eine Verriegelungsleiste 8 an seiner Kopfseite 3. Die erste Verriegelungsleiste 7 ist bodenseitig des Paneels 1 angeordnet und springt über die Kopfseite 3 vor. Die Unterseite 9 des ersten Paneels 1 ist gleichzeitig die Unterseite der ersten Verriegelungsleiste 7. Die erste Verriegelungsleiste 7 weist einen nach oben offenen ersten Kuppelkanal 10 auf, an den sich endseitig ein nach oben, das heißt, von der Unterseite 9 weg gerichteter Kuppelwulst 11 anschließt. Der Kuppelwulst 11 bildet eine Hinterschneidung in Horizontalrichtung. Er fasst in eine zweite Kuppelnut 12 des zweiten Paneels 2. Die zweite Kuppelnut 12 ist nach unten, das heißt, zur Unterseite 9 hin offen. Die zweite Kuppelnut 12 wird durch einen zweiten Kuppelwulst 13 begrenzt. Der zweite Kuppelwulst 13 fasst in der Einbaulage von oben in die erste Kuppelnut 12 ein. Dadurch entsteht eine Hakenverbindung in Horizontalrichtung. Hierbei kontaktieren sich die einander zugewandten und in die gleiche Richtung geneigt verlaufenden Flanken 14, 15 am ersten Kuppelwulst 11 und zweiten Kuppelwulst 13. Die Flanken 14, 15 stehen in einem Winkel W1 zueinander, der kleiner ist als 90° bezogen auf die Unterseite 9 der Paneele 1, 2. Dadurch werden beim Absenken des zweiten Paneels 2 gegenüber dem ersten Paneel 1 die Kopfseiten 3, 4 gegeneinander gedrückt, so dass der Übergang im Stoßbereich der beiden Paneele 1, 2 in der Deckschicht quasi fugenlos ist.

Das zweite Paneel 2 liegt dabei auf einem Rastvorsprung 16 des ersten Paneels 1 auf. Der Rastvorsprung 16 erstreckt sich horizontal und in geringem Abstand zu einer Oberseite 17 der Paneele 1, 2. Eine von oben auf das zweite Paneel 2 einwirkende Kraft wird dadurch unmittelbar in das erste Paneel 1 eingeleitet. An dem Rastvorsprung 16, der gegenüber der Kopfseite 4 des ersten Paneels 1 in Richtung des zweiten Paneels 2 vorsteht, schließt sich nach unten aber oberhalb der ersten Verriegelungsleiste 7 eine Haltenut 18 an. Die Haltenut 18 ist zur Kopfseite 4 offen. Sie ist gegenüber der Horizontalen, das heißt, gegenüber der Verlegebene bzw. Unterseite 9 bei diesem Ausführungsbeispiel nicht parallel angeordnet, sondern in einem Winkel W2 angeordnet. Der Winkel W2 beträgt 3° bis 7°, insbesondere 5°.

In der Haltenut 18 befindet sich eine Verriegelungsfeder 19. Die Verriegelungsfeder 19 ist in der dargestellten Position mehrstückig. Sie besitzt drei Funktionskomponenten. Einerseits besitzt die Verriegelungsfeder 19 einen Sperrkörper 20, der in der dargestellten Position aus einem Mündungsbereich der Haltenut 18 herausragt und hinter eine Verriegelungskante 21 des benachbarten zweiten Paneels 2 fasst. Die Verriegelungskante 21 ist der untere Mündungsbereich einer Verriegelungsnut 22, die sich zwischen dem zweiten Kuppelwulst 13 und einem Stützvorsprung 23 befindet. Der Stützvorsprung 23 liegt in der Einbaulage auf dem Rastvorsprung 16 des ersten Paneels 1 auf. Der Stützvorsprung 23 kann aber auch Bestandteil einer oberen Nutflanke der Verriegelungsnut 22 sein.

Die Verriegelungsfeder 19 besitzt neben dem Sperrkörper 20 einen mittleren Teil, der als Arm 24 bezeichnet wird. Der Arm 24 ist mit dem Sperrkörper 20 verbunden und stützt sich an dem Halter 25 in nicht näher dargestellter Weise ab. Der Halter 25 ist derjenige Teil der Verriegelungsfeder 19, der am tiefsten in der Haltenut 18 angeordnet ist. Der Halter 25 stützt sich am Nutgrund 26 der Haltenut 18 ab. Die Verriegelungsfeder 19 erstreckt sich von einer unteren Nutflanke 27 bis zu einer oberen Nutflanke 28 und wird durch die Nutflanken 27, 28 geführt. Hierbei werden sowohl die Arme 24 als auch der Sperrkörper 20 innerhalb der Haltenut 18 geführt. Der Halter 25 ist feststehend und in nicht näher dargestellter Weise über Vorsprünge mit der unteren Nutflanke 27 und der oberen Nutflanke 28 verkrallt, so dass er sich nach der Montage innerhalb der Haltenut 18 nicht in Längsrichtung der Haltenut 18 verschieben lässt. Die Längsrichtung der Haltenut 18 ragt bei der Darstellung der Figur 2 in die Bildebene hinein. Quer zur Haltenut 18 meint im Kontext der Erfindung eine Bewegung, die aus der Haltenut 18 herausführt, mithin eine Bewegung vom Nutgrund 26 weg oder zum Nutgrund 28 hin.

Figur 2 zeigt, dass ein aus der Haltenut 18 längsseitig vorstehender Teil des Sperrkörpers 20 im Übergang von seiner Oberseite 29 zu seiner vom Nutgrund 26 wegweisenden Stirnseite 30 eine geneigte Gleitfläche 31 besitzt. Die Gleitfläche 31 kann auch als überdimensionierte Fase bezeichnet werden. Über diese Gleitfläche 31 bzw. Fase ist es möglich, den Sperrkörper 20 beim vertikalen Ablegen des zweiten Paneels 2 relativ zum ersten Paneel 1 in die Haltenut 18 zurückzuverlagern. Hierbei gleitet die Gleitfläche 31 an einer Steuerkante 32 des zweiten Paneels 2 ab. Die Steuerkante 32 befindet sich endseitig des zweiten Kuppelwulstes 13 im Übergangsbereich zur Verriegelungskante 21 unterhalb der Verriegelungsnut 22. Die Steuerkante 32 ist vorzugsweise gerundet und insbesondere konvex ausgebildet.

Wenn das zweite Paneel 2 so weit abgesenkt ist, dass der Stützvorsprung 23 des zweiten Paneels auf dem Rastvorsprung 16 des ersten Paneels aufliegt, wird der Sperrkörper 20 durch die federnde Rückstellkraft des Arms 24 hinter die Verriegelungskante 21 des zweiten Paneels 2 gedrückt. Hierdurch überbrückt der Sperrkörper 20 einen Spalt zwischen der Haltenut 18 und der Verriegelungsnut 22. Das zweite Paneel 2 kann nun nicht mehr in Vertikalrichtung verlagert werden und ist sowohl in Horizontalrichtung als auch in Vertikalrichtung mit dem ersten Paneel 1 verriegelt. Die genaue Funktionsweise der Verriegelungsfeder und des Verriegelungsvorganges wird anhand der nachfolgenden Figuren erläutert.

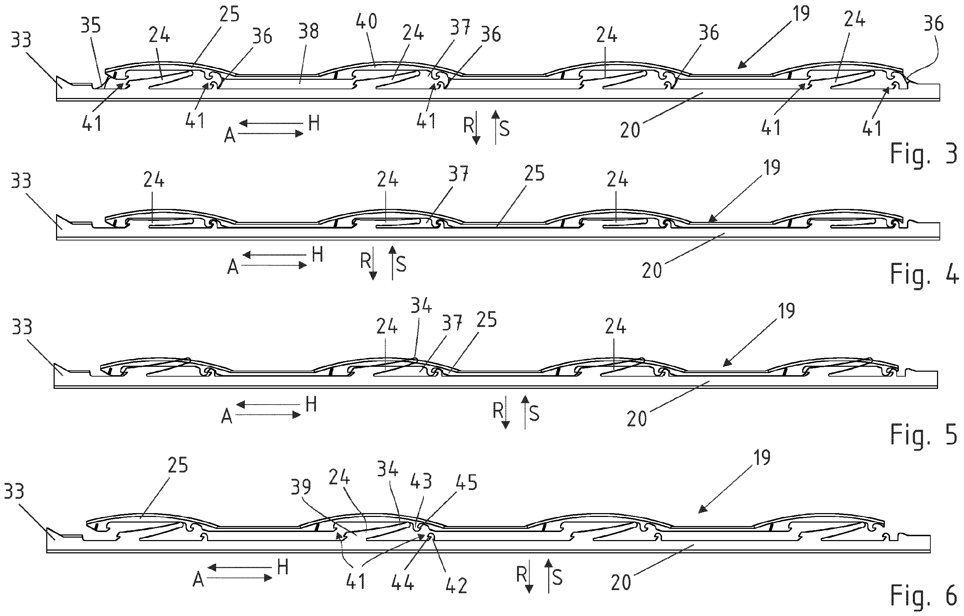

Figur 3 zeigt die Verriegelungsfeder 19 in einer Draufsicht. Die Verriegelungsfeder 19 besitzt einen dreiteiligen Aufbau und umfasst den Sperrkörper 20, der aus der Haltenut 18 verlagerbar ist. Der Halter 25 mit den bogenförmigen Abschnitten ist etwas kürzer als der Sperrkörper 20. Der Sperrkörper 20 kann aber etwas länger sein, als die Breite der Kopfseite eines Paneels 1, 2, wobei die Breite der Kopfseite an der Oberseite des Paneels zu messen ist und der Breite der im verlegten Zustand sichtbaren Deckschicht entspricht. Zwischen dem Sperrkörper 20 und dem Halter 25 befindet sich eine Anordnung von identischen Armen 24.

Die Verriegelungsfeder 19 besteht aus Kunststoff, insbesondere aus glasfaserverstärktem Polyamid. Sie ist materialeinheitlich einstückig aufgebaut. Sie erstreckt sich im Wesentlichen über die gesamte Länge einer Kopfseite 3, 4. Der Halter 25 ist ebenso wie der Sperrkörper 20 ein durchgehendes Bauteil.

An dem in der Bildebene linken Ende der Verriegelungsfeder 19 ist zu erkennen, dass der Sperrkörper 20 ein in Richtung zum Halter 25 weisendes verdicktes Betätigungsende 33 aufweist. Das Betätigungsende 33 dient dazu, eine Druckkraft auf den Sperrkörper 20 in Richtung des eingezeichneten Pfeils A auszuüben. In diese Richtung soll eine Auslösekraft A ausgeübt werden können, um den Sperrkörper 20 aus einer vorgespannten Position in eine Verriegelungsposition zu verlagern. Hierzu steht das Betätigungsende 33 in der Einbaulage ein kleines Stück aus dem Ende der Haltenut 18, das heißt, in Richtung der Längsseiten 5, 6 des Paneels 1 (Figur 1) und dem Nutgrund der dortigen längsseitigen Kuppelnut vor. In der verriegelten Position befindet sich die Verriegelungsfeder 19 vollständig innerhalb der Haltenut 18 und schließt vorzugsweise bündig mit dem Nutgrund der längsseitigen Kuppelnut ab. Es steht weder in der inneren, vorgespannten Position, noch in der Verriegelungsposition über eine längsseitige Dekorkante der Oberseite des Paneels vor. Das Betätigungsende 33 steht 0,1 mm - 2 mm, vorzugsweise 0,5 mm - 1 mm gegenüber dem Nutgrund der längsseitigen Kuppelnut vor. Der Betätigungsweg ist kleiner als der Weg, um den die Verriegelungsfeder 19 beim Verriegeln quer zur Haltenut 18 ausfährt. Durch Anlegen eines weiteren Paneels 1, 2 im Bereich der Längsseiten 5, 6, kann das Betätigungsende 33 in Längsrichtung der Haltenut 18 verlagert werden. Die Auslösekraft A kann aber auch ein manueller Druck auf das Betätigungsende 33 sein.

Figur 3 zeigt, dass sich die Anordnung der Arme 24 in regelmäßigen Abständen wiederholt. Figur 3 zeigt eine Verriegelungsfeder 19, die als solche zusammen mit weiteren baugleichen Verriegelungsfedern 19 in einem Tray angeordnet ist. Ein Tray ist eine im Spritzgussverfahren hergestellte Anordnung mehrerer baugleicher Verriegelungsfedern 19, die über Anspritzpunkte miteinander verbunden sind. Die Figur zeigt den Ausgangszustand aus dem Tray der vereinzelten Verriegelungsfedern 19 unmittelbar nach der Fertigung. Die Verriegelungsfeder 19 ist noch nicht in einem Paneel 1, 2 montiert.

Es ist zu erkennen, dass sich der Halter 25 im Ausgangszustand in größerem Abstand von dem Sperrkörper 20 befindet. Der Sperrkörper 20 ist über Sollbruchstellen 35, 36 mit dem Halter 25 verbunden. Die Sollbruchstellen 35, 36 sind schmale Stege. Sie sind jeweils im endseitigen Bereich des Halters 25 angeordnet. Zusätzliche Sollbruchstellen 36 befinden sich im mittleren Bereich. Insgesamt sind in Bezug auf die vier Arme fünf Sollbruchstellen 35, 36 vorgesehen. Die Arme 24 sind bei diesem Ausführungsbeispiel im Wesentlichen gerade und überbrücken einen Spalt 38 zwischen dem Halter 25 und dem Sperrkörper 20. Der Spalt 38 wird zusätzlich nur durch die Sollbruchstellen 35, 36 überbrückt. Der Spalt 38 ist im Bereich der Arme 24 etwas größer, so dass im Bereich der Arme 24 Taschen 37 ausgebildet sind. Anhand der Figuren 3 und 4 ist zu erkennen, dass die Taschen 37 dafür vorgesehen sind, die Arme 24 in der inneren, vorgespannten Position (Figur 4) aufzunehmen.

Der Sperrkörper 20 soll anfänglich nicht aus der Haltenut 18 ragen. Daher wird die Verriegelungsfeder 19 tief in die Haltenut 18 gedrückt. Es wird eine Kraft auf den Sperrkörper 20 in Richtung des Halters 25 ausgeübt. Der Pfeil S soll die Spannkraft S zum Einsetzen der Verriegelungsfeder 19 symbolisieren. Figur 4 zeigt schließlich die Position, in welcher der Sperrkörper 20 an dem Halter 25 anliegt.

Der Sperrkörper 20 soll selbsttätig aus dieser Position zurückspringen. Dies wird dadurch erreicht, dass der Arm 24 als federnder Arm 24 ausgebildet ist, wobei sich ein Ende 34 des Arms innerhalb der Tasche 37 an dem Halter 25 abstützt. Sein anderes Ende 39 ist fest mit dem Sperrkörper 20 verbunden. Anhand der Gegenüberstellung der Figuren 3 und 4 ist zu erkennen, wie die jeweiligen Arme 24 von ihrer Ausgangsposition in die vorgespannte Position verlagert werden. Der Arm 24 in Figur 4 ist durch die von außen aufgebrachte Spannkraft S verformt worden. Er besitzt allerdings eine materialeigene Rückstellkraft. Die Verriegelungsfeder 19 besteht daher aus einem elastischen Werkstoff. Die Verformung des Arms 24 bewegt sich im elastischen Bereich des Werkstoffes, um diese aus der elastischen Federkraft resultierende Rückstellkraft über den Arm 24 von der in Figur 4 dargestellten inneren, vorgespannten Position wieder in die in Figur 3 dargestellte Ausgangsposition zu verlagern. Figur 3 zeigt einen Pfeil R, der entgegen dem mit S gekennzeichneten Pfeil gerichtet ist. Das ist die Rückstellkraft R des Arms 24 bzw. der Arme 24, die entgegen der Spannkraft S wirkt.

Um die Auslösekraft A aufzunehmen, sind die Halter 25 so ausgebildet, dass sie in formschlüssigem Eingriff mit der Haltenut 26 (Figur 2) stehen. Die Haltenut 26 besitzt hierzu nicht näher dargestellte Vertiefungen, die im Wesentlichen gegengleich zu der nutgrundseitigen Geometrie des Halters 25 ausgebildet sind. Die Vertiefungen sind konkav ausgebildet. Sie sind insbesondere bogenförmig gekrümmt. Der Halter 25 besitzt hierzu im Bereich der Taschen 37 ebenfalls bogenförmig gekrümmte Vorsprünge 40. Der Nutgrund 26 der Nut ist dementsprechend nicht gerade oder eben. Die Tiefe der Haltenut 18 variiert über die Länge. Der Bereich der Tasche 37, an dem das freie Ende 30 des Arms 24 anliegt, ist parallel zum Nutgrund orientiert und dient lediglich als Widerlager für den Arm. Der feststehende Halter hat keinen mechanisch wirksamen Anteil an der Relativverlagerung des Sperrkörpers 20 aus der Haltenut 18 heraus. Die bogenförmigen Vertiefungen im Nutgrund 26 der Haltenut haben den Vorteil, dass im Zusammenspiel mit den Vorsprüngen 40 am Halter eine exakte Positionierung der Verriegelungsfeder 19 ermöglicht wird. Gleichzeitig nimmt der Halter 25 eine Haltekraft H auf. Der Pfeil H ist entgegengesetzt der Auslösekraft A gerichtet. Die Haltekraft H ist mindestens genauso groß wie die Auslösekraft A.

Ein wesentlicher Bestandteil der Verriegelungsfeder 19 sind Rastmittel 41, über welche der Sperrkörper 20 an dem Halter 25 gehalten werden kann.

Wie anhand der Figuren 3 bis 5 zu erkennen ist, besitzen die Arme 24 alle die gleiche Orientierung. Sie stehen im spitzen Winkel zur Längserstreckung der Verriegelungsfeder 19 und weisen mit dem am Sperrkörper 20 angeordneten Ende 39 in Richtung zum Betätigungsende 33. Das andere, freie Ende 34 weist vom Betätigungsende 33 weg. Es ist nicht mit dem Halter 25 verbunden, sondern berührt ihn nur. Das freie Ende 34 ist gerundet.

Bei dieser Ausgestaltung werden die Arme über die Rastmittel 41 in lösbarem Eingriff mit dem Halter gebracht (Figur 4). Hierbei werden die Sollbruchstellen 35, 36 zerstört. Bei diesem Ausführungsbeispiel sind die Rastmittel 41 hakenförmig konfiguriert. Zu jedem bogenförmigen Abschnitt des Halters 25 gibt es jeweils zwei Rastmittel 41. Die Rastmittel 41 besitzen jeweils erste Rasthaken 42, die an dem Sperrkörper 20 angeordnet sind und korrespondierende zweite Rasthaken 43, die unmittelbar an dem Halter 25 angeordnet sind (Figur 6). Die Rasthaken 42 befinden sich beiderseits des Arms 25. Ein erster Rasthaken 42 ist am Übergang vom Sperrkörper 20 zum Arm 24 ausgebildet. Das heißt er befindet sich in unmittelbarer Nähe des nicht-freien Endes 39 des Arms 24. Der andere erste Rasthaken 42 befindet sich in der Nähe des freien Endes 34 des Arms 24.

Um die Arme in die innere, vorgespannte Position zu verlagern, so wie sie in Figur 4 dargestellt ist, müssten die Arme 24 abgeflacht werden. Die ursprünglichen spitzen Winkel zur Längsrichtung der Verriegelungsfeder 19 stehenden Arme 24 verlaufen in der eingemangelten, das heißt in der vorgespannten, inneren Position nahezu parallel zur Längsrichtung der Verriegelungsfeder 19. In der eingespannten Position, wie sie in Figur 4 dargestellt ist, greifen dann auch die ersten Rasthaken 42 hinter die zweiten Rasthaken 43.

Die ersten Rasthaken 42 sind so orientiert, dass eine erste Rastnase 44 in Richtung zum Betätigungsende 33 weist. Wenn nun das Betätigungsende 33 in Richtung des Pfeils A durch die Auslösekraft A verlagert wird, gleitet diese erste Rastnase 44 von der in entgegengesetzte Richtung weisenden zweiten Rastnase 45 am Halter 25 ab. Die Verlagerung der ersten und zweiten Rastnasen 44, 45 zueinander erfolgt parallel zur Längsrichtung der Haltenut 18. Eine Verlagerung quer zur Haltenut 18, das heißt aus der Haltenut 18 heraus, vollzieht der Sperrkörper 20 erst dann, wenn sich die Rasthaken 42, 43 voneinander gelöst haben. In diesem Fall schwenken die Arme durch ihre Rückstellkraft R aus. Das soll Figur 5 verdeutlichen. Die Arme 24 können dabei natürlich nicht den Halter 25 durchdringen. Die Anordnung zeigt jedoch den Hubweg der freien Enden 34 der Arme 24.

Figur 6 zeigt schließlich die ausgefahrene Position des Sperrkörpers 20. Das ist die Einbaulage der Verriegelungsfeder 19. Die Sollbruchstellen 35,36 wurden zerstört und sind nicht mehr vorhanden. Die Rastmittel 41 sind voneinander getrennt. Es handelt sich bei dem Sperrkörper 20 nun um ein völlig separates und von dem Halter 25 getrenntes Bauteil, welches die vertikale Trennebene zwischen der Haltenut 18 und der Verriegelungsnut 22 (Figur 2) drückt und für eine Vertikalverriegelung der benachbarten Paneele 1, 2 sorgt.

### Bezugszeichen:

- 1 - 1.: Paneel
- 2 - 2.: Paneel
- 3 -: Kopfseite
- 4 -: Kopfseite
- 5 -: Längsseite
- 6 -: Längsseite
- 7 - 1.: Verriegelungsleiste
- 8 - 2.: Verriegelungsleiste
- 9 -: Unterseite
- 10- 1.: Kuppelkanal
- 11 - 1.: Kuppelwulst
- 12- 2.: Kuppelnut
- 13 - 2.: Kuppelwulst
- 14-: Flanke
- 15-: Flanke
- 16-: Rastvorsprung
- 17-: Oberseite
- 18 -: Haltenut
- 19-: Verriegelungsfeder
- 20 -: Sperrkörper
- 21 -: Verriegelungskante
- 22 -: Verriegelungsnut
- 23 -: Stützvorsprung
- 24 -: Arm
- 25 -: Halter
- 26 -: Nutgrund
- 27 -: untere Nutflanke
- 28 -: obere Nutflanke
- 29 -: Oberseite
- 30 -: Stirnseite
- 31 -: Gleitfläche
- 32 -: Steuerkante
- 33 -: Betätigungsende
- 34 -: freies Ende von 24
- 35 -: Sollbruchstelle
- 36 -: Sollbruchstelle
- 37 -: Tasche
- 38 -: Spalt
- 39 -: Ende von 24
- 40 -: Vorsprung
- 41 -: Rastmittel
- 42 -: erster Rasthaken
- 43 -: zweiter Rasthaken
- 44 -: erste Rastnase
- 45 -: zweite Rastnase

- A -: Auslösekraft
- H -: Haltekraft
- R -: Rückstellkraft
- S -: Spannkraft
- W1 -: Winkel
- W2 -: Winkel

## Patentansprüche

1. Mechanische Verbindung für Paneele mit folgenden Merkmalen:
a) Die Paneele (1, 2) weisen an ihren miteinander zu verbindenden Seiten (1, 2) eine Profilierung auf, über welche benachbarte erste und zweite Paneele (1, 2) in der Montagelage miteinander verriegelbar sind;
b) Eine Verriegelungsfeder (19) ist an dem ersten Paneel (1) in eine Haltenut (18) eingesetzt und ist beim Verriegeln der Paneele (1, 2) teilweise hinter eine Verriegelungskante (21) des benachbarten zweiten Paneels (1, 2) verlagerbar;
c) Die Verriegelungsfeder (19) besitzt einen Sperrkörper (20), der dafür ausgebildet ist, von einer Freigabeposition in eine Verriegelungsposition verlagert zu werden, um in der Verriegelungsposition hinter die Verriegelungskante (21) zu greifen;
d) Der Sperrkörper (20) stützt sich über wenigstens einen federnden Arm (24) an wenigstens einem Halter (25) ab, der in der Haltenut (18) gehalten ist;
e) Der Sperrkörper (20) ist vor der Montage in der Haltenut (18) über Solbruchverbindungen (35, 36) stoffschlüssig mit dem Halter (25) verbunden, wobei die Sollbruchverbindungen (35, 36) dafür vorgesehen sind, beim Verlagern des Sperrkörpers (20) zu dem wenigstens einen Halter (25) zerstört zu werden, wobei das Annähern entgegen der Federkraft (S) des wenigstens einen Arms (24) erfolgt, wobei zwischen dem Sperrkörper (20) und dem Halter (25) wirksame Rastmittel (41) vorgesehen sind, die in einer inneren, vorgespannten Position des wenigstens einen Arms (24) den Sperrkörper (20) in lösbarem Rasteingriff an dem Halter (25) halten;
f) Der wenigstens eine federnde Arm (24) ist unter dem Einfluss einer in Längsrichtung der Haltenut (18) auf den Sperrkörper (20) wirkenden Auslösekraft (A) aus dem Rasteingriff in der inneren, vorgespannten Position lösbar, so dass der Sperrkörper (20) unter dem Einfluss der Rückstellkraft (R) des wenigstens einen federnden Arms (24) teilweise aus der Haltenut (18) heraus in die Verriegelungsposition verlagerbar ist.

2. Mechanische Verbindung nach Anspruch 1, **dadurch gekennzeichnet, dass** die Rastmittel (41) an dem wenigstens einen Arm (24) angeordnet sind.

3. Mechanische Verbindung nach Anspruch 1 oder 2, **dadurch gekennzeichnet, dass** die Rastmittel (41) Hakenverbindungen sind, die durch Schub in Längsrichtung der Haltenut (18) lösbar sind.

4. Mechanische Verbindung nach Anspruch 3, **dadurch gekennzeichnet, dass** die jeweils eine Hakenverbindung in der Nähe des freien Endes (34) eines Arms (24) und in der Nähe des nicht-freien Endes (39) eines Arms (24) angeordnet sind.

5. Mechanische Verbindung nach einem der Ansprüche 1 bis 4, **dadurch gekennzeichnet, dass** der wenigstens eine Halter (25) wenigstens eine Tasche (37) zur Aufnahme des wenigstens einen federnden Arms (24) in der inneren, vorgespannten Position besitzt.

6. Mechanische Verbindung nach einem der Ansprüche 1 bis 5, **dadurch gekennzeichnet, dass** ein längsseitig aus der Haltenut (18) vorstehender Teil des Sperrkörpers (20) im Übergang von seiner Oberseite (29) zu seiner Stirnseite (30) eine geneigte Gleitfläche (31) besitzt, über welche der Sperrkörper (20) beim vertikalen Ablegen oder Abwinkeln des benachbarten Paneels (2) wieder in die Haltenut (18) zurück verlagerbar ist, ohne dabei die innere, vorgespannte Position zu erreichen und unter dem Einfluss der Federkraft (R) des wenigstens einen Arms (24) in der Montagelage wieder hinter die Verriegelungskante (21) greift.

7. Verfahren zur Montage einer Verriegelungsfeder in einem Paneel zur Herstellung einer mechanischen Verbindung nach einem der Ansprüche 1 bis 6, **dadurch gekennzeichnet, dass** die Verriegelungsfeder (19) in die Haltenut (18) eingesetzt wird, so dass der Halter (25) am Nutgrund (26) der Haltenut (18) anliegt, anschließend der Sperrkörper (20) unter Zerstörung der Sollbruchverbindungen (35, 36) in Richtung des Nutgrundes (26) der Haltenut (18) verlagert wird, so dass der wenigstens eine Arm (24) vorgespannt wird, bis eine zwischen dem Sperrkörper (20) und dem Halter (25) wirksame Rastverbindung hergestellt ist.

8. Verfahren zum Verbinden von Paneelen mit einer mechanischen Verbindung nach einem der Ansprüche 1 bis 6, **dadurch gekennzeichnet, dass** ein erstes Paneel (1) verlegt wird und anschließend ein zweites Paneel (2) mit einer vertikalen Absenk- oder Abschwenkbewegung randseitig an dem ersten Paneel (1) platziert wird, während sich die Verriegelungsfeder (19) in der vorgespannten Freigabeposition am ersten Paneel (1) befindet, wobei die Rastverbindung zwischen dem Sperrkörper (20) und dem Halter (25) durch eine in Längsrichtung der Haltenut (18) wirkende Auslösekraft (A) gelöst und der Sperrkörper (2) unter dem Einfluss der Rückstellkraft (R) des wenigstens einen Arms (24) in die Verriegelungsposition verlagert wird.

9. Verfahren zum Verbinden von Paneelen mit einer mechanischen Verbindung nach einem der Ansprüche 1 bis 6, **dadurch gekennzeichnet, dass** ein erstes Paneel (1) verlegt wird und anschließend ein zweites Paneel (2) mit einer vertikalen Absenk- oder Abschwenkbewegung randseitig an dem ersten Paneel (1) platziert wird, während die Verriegelungsfeder (19) entspannt ist und der Sperrkörper (20) aus der Haltenut (19) herausragt, wobei der Sperrkörper (20) beim Ansetzen des zweiten Paneels (2) nur soweit durch Abgleiten auf der Gleitfläche (31) des Sperrkörpers (20) in die Haltenut (18) gedrückt wird, dass die Rastmittel (41) nicht miteinander in Eingriff gelangen und der Sperrkörper (20) unter dem Einfluss der Rückstellkraft (R) des wenigstens eines Arms (24) in die Verriegelungsposition verlagert wird.

## Claims

1. Mechanical connection for panels having the following features:
a) the panels (1, 2) have at the sides (1, 2) thereof which are intended to be connected to each other a profiling via which adjacent first and second panels (1, 2) can be locked to each other in the assembly position;
b) a locking spring (19) is inserted on the first panel (1) in a retention groove (18) and, when the panels (1, 2) are locked, can be displaced partially behind a locking edge (21) of the adjacent second panel (1, 2);
c) the locking spring (19) has a locking member (20) which is constructed to be displaced from a release position into a locking position in order to engage in the locking position behind the locking edge (21);
d) the locking member (20) is supported by means of at least one resilient arm (24) on at least one retention member (25) which is retained in the retention groove (18);
e) the locking member (20) is connected to the retention member (25) prior to assembly in the retention groove (18) by means of desired breaking connections (35, 36) in a materially engaging manner, wherein the desired breaking connections (35, 36) are provided to be destroyed when the locking member (20) is displaced relative to the at least one retention member (25), wherein the approach is carried out counter to the resilient force (S) of the at least one arm (24), wherein between the locking member (20) and the retention member (25), there are provided active locking means (41), which in an internal pretensioned position of the at least one arm (24) retain the locking member (20) in releasable locking engagement on the retention member (25);
f) the at least one resilient arm (24) under the influence of an actuation force (A) acting on the locking member (20) in the longitudinal direction of the retention groove (18) can be released from the locking engagement in the internal pretensioned position so that the locking member (20) under the influence of the restoring force (R) of the at least one resilient arm (24) can be displaced partially out of the retention groove (18) into the locking position.

2. Mechanical connection according to claim 1, **characterised in that** the locking means (41) are arranged on the at least one arm (24).

3. Mechanical connection according to claim 1 or 2, **characterised in that** the locking means (41) are hook connections which can be released by means of pushing in the longitudinal direction of the retention groove (18).

4. Mechanical connection according to claim 3, **characterised in that** one hook connection in each case is arranged in the vicinity of the free end (34) of an arm (24) and in the vicinity of the non-free end (39) of an arm (24).

5. Mechanical connection according to any one of claims 1 to 4, **characterised in that** the at least one retention member (25) has at least one pocket (37) for receiving the at least one resilient arm (24) in the internal pretensioned position.

6. Mechanical connection according to any one of claims 1 to 5, **characterised in that** a portion of the locking member (20) which protrudes at the longitudinal side from the retention groove (18) has in the transition from the upper side (29) thereof to the end face (30) thereof an inclined sliding face (31) via which the locking member (20) when the adjacent panel (2) is vertically deposited or angled can be displaced back into the retention groove (18) again without reaching the internal pretensioned position and under the influence of the resilient force (R) of the at least one arm (24) engages in the assembly position again behind the locking edge (21).

7. Method for assembling a locking spring in a panel for producing a mechanical connection according to any one of claims 1 to 6, **characterised in that** the locking spring (19) is inserted into the retention groove (18) so that the retention member (25) is in abutment with the groove base (26) of the retention groove (18), subsequently the locking member (20), with the desired breaking connections (35, 36) being destroyed, is displaced in the direction of the groove base (26) of the retention groove (18) so that the at least one arm (24) is pretensioned until an effective locking connection is produced between the locking member (20) and the retention member (25).

8. Method for connecting panels with a mechanical connection according to any one of claims 1 to 6, **characterised in that** a first panel (1) is laid and subsequently a second panel (2) is placed with a vertical lowering or pivoting movement at the edge side on the first panel (1), whilst the locking spring (19) is located in the pretensioned release position on the first panel (1), wherein the locking connection between the locking member (20) and the retention member (25) is released by means of an actuation force (A) which acts in the longitudinal direction of the retention groove (18) and the locking member (2) under the influence of the restoring force (R) of the at least one arm (24) is displaced into the locking position.

9. Method for connecting panels with a mechanical connection according to any one of claims 1 to 6, **characterised in that** a first panel (1) is laid and subsequently a second panel (2) is placed with a vertical lowering or pivoting movement at the edge side on the first panel (1), whilst the locking spring (19) is relaxed and the locking member (20) protrudes from the retention groove (19), wherein the locking member (20) when the second panel (2) is placed is pressed by means of sliding on the sliding face (31) of the locking member (20) into the retention groove (18) only to such an extent that the locking means (41) do not move into engagement with each other and the locking member (20) under the influence of the restoring force (R) of the at least one arm (24) is displaced into the locking position.

## Revendications

1. Liaison mécanique pour des panneaux, avec les caractéristiques suivantes :
a) les panneaux (1, 2) présentent, au niveau de leurs côtés (1, 2) à relier les uns aux autres, un profilage, par l'intermédiaire duquel des premiers et des deuxièmes panneaux (1, 2) adjacents peuvent être verrouillés les uns aux autres dans la position de montage ;
b) un ressort de verrouillage (19) est inséré dans une rainure de maintien (18) au niveau du premier panneau (1) et peut être déplacé, lors du verrouillage des panneaux (1, 2), en partie derrière une arête de verrouillage (21) du deuxième panneau (1, 2) adjacent ;
c) le ressort de verrouillage (19) possède un corps de blocage (20), qui est réalisé pour être déplacé d'une position de déblocage dans une position de verrouillage pour venir en prise, dans la position de verrouillage, à l'arrière de l'arête de verrouillage (21) ;
d) le corps de blocage (20) prend appui, par l'intermédiaire au moins d'un bras (24) sur ressorts, au niveau au moins d'un support (25), qui est maintenu dans la rainure de maintien (18) ;
e) le corps de blocage (20) est relié, avant le montage dans la rainure de maintien (18), par liaison de matière au support (25) par l'intermédiaire de liaisons de rupture théorique (35, 36), dans laquelle les liaisons de rupture théorique (35, 36) sont prévues pour être détruites lors du déplacement du corps de blocage (20) en direction de l'au moins un support (25), dans laquelle le rapprochement a lieu à l'encontre de la force de ressort (S) de l'au moins un bras (24), dans laquelle sont prévus, entre le corps de blocage (20) et le support (25), des moyens d'enclenchement (41) actifs, qui maintiennent, dans une position intérieure précontrainte de l'au moins un bras (24), le corps de blocage (20) dans une prise par enclenchement pouvant être détachée au niveau du support (25) ;
f) l'au moins un bras (24) sur ressorts peut être détaché hors de la prise par enclenchement dans la position intérieure précontrainte sous l'effet d'une force de déclenchement (A) agissant dans la direction longitudinale de la rainure de maintien (18) sur le corps de blocage (20) de sorte que le corps de blocage (20) puisse être déplacé en partie hors de la rainure de maintien (18) dans la position de verrouillage sous l'effet de la force de rappel (R) de l'au moins un bras (24) sur ressorts.

2. Liaison mécanique selon la revendication 1, **caractérisée en ce que** les moyens d'enclenchement (41) sont disposés au niveau de l'au moins un bras (24).

3. Liaison mécanique selon la revendication 1 ou 2, **caractérisée en ce que** les moyens d'enclenchement (41) sont des liaisons à crochets, qui peuvent être détachées par poussée dans la direction longitudinale de la rainure de maintien (18).

4. Liaison mécanique selon la revendication 3, **caractérisée en ce que** respectivement une liaison à crochets est disposée à proximité de l'extrémité (34) libre d'un bras (24) et une liaison à crochets est disposée à proximité de l'extrémité (39) non libre d'un bras (24).

5. Liaison mécanique selon l'une des revendications 1 à 4, **caractérisée en ce que** l'au moins un support (25) possède au moins un compartiment (37) servant à recevoir l'au moins un bras (24) sur ressorts dans la position intérieure précontrainte.

6. Liaison mécanique selon l'une des revendications 1 à 5, **caractérisée en ce qu'**une partie, faisant saillie côté longitudinal de la rainure de maintien (18), du corps de blocage (20) possède, dans le passage partant de son côté supérieur (29) vers son côté frontal (30), une surface de glissement (31) inclinée, par l'intermédiaire de laquelle le corps de blocage (20) peut être ramené à nouveau dans la rainure de maintien (18) lors de la pose ou du pliage de manière verticale du panneau (2) adjacent sans atteindre la position intérieure précontrainte, et vient en prise, dans la position de montage, à nouveau par l'arrière de l'arête de verrouillage (21) sous l'effet de la force de ressort (R) de l'au moins un bras (24).

7. Procédé servant au montage d'un ressort de verrouillage dans un panneau servant à fabriquer une liaison mécanique selon l'une des revendications 1 à 6, **caractérisé en ce que** le ressort de verrouillage (19) est inséré dans la rainure de maintien (18) de sorte que le support (25) repose au niveau du fond de rainure (26) de la rainure de maintien (18), le corps de blocage (20) est ensuite déplacé en direction du fond de rainure (26) de la rainure de maintien (18) en détruisant les liaisons de rupture théorique (35, 36), de sorte que l'au moins un bras (24) soit précontraint jusqu'à établir une liaison par enclenchement active entre le corps de blocage (20) et le support (25).

8. Procédé servant à relier des panneaux avec une liaison mécanique selon l'une des revendications 1 à 6, **caractérisé en ce qu'**un premier panneau (1) est posé et un deuxième panneau (2) est ensuite placé avec un déplacement d'abaissement ou d'abaissement par pivotement vertical du côté du bord au niveau du premier panneau (1), tandis que le ressort de verrouillage (19) se trouve dans la position de déblocage précontrainte au niveau du premier panneau (1), dans lequel la liaison par enclenchement entre le corps de blocage (20) et le support (25) est détachée par une force de déclenchement (A) agissant dans la direction longitudinale de la rainure de maintien (18) et le corps de blocage (2) est déplacé dans la position de verrouillage sous l'effet de la force de rappel (R) de l'au moins un bras (24).

9. Procédé servant à relier des panneaux avec une liaison mécanique selon l'une des revendications 1 à 6, **caractérisé en ce qu'**un premier panneau (1) est posé et un deuxième panneau (2) est ensuite placé avec un déplacement d'abaissement ou d'abaissement par pivotement vertical du côté du bord au niveau du premier panneau (1), tandis que le ressort de verrouillage (19) est détendu et que le corps de blocage (20) dépasse de la rainure de maintien (19), dans lequel le corps de blocage (20) est enfoncé dans la rainure de maintien (18), lors de la mise en place du deuxième panneau (2), par glissement sur la surface de glissement (31) du corps de blocage (20) seulement jusqu'à ce que les moyens d'enclenchement (41) ne parviennent pas en prise les uns avec les autres et que le corps de blocage (20) soit déplacé dans la position de verrouillage sous l'effet de la force de rappel (R) de l'au moins un bras (24).
